# EUROPEAN PATENT SPECIFICATION

(11) **EP 4 259 961 B1**
(45) Date of publication and mention of the grant of the patent: **23.07.2025**
(21) Application number: 21839026.8
(22) Date of filing: 08.12.2021
(51) Int. Cl.: F16L 55/115, F16L 55/11, F16L 41/00, G01K 13/00, G01L 19/00

(54) **A CAP FOR SENSING ONE OR MORE CONDITIONS WITHIN A PIPE**
KAPPE ZUR ERFASSUNG EINER ODER MEHRERER ZUSTÄNDE IN EINEM ROHR
BOUCHON PERMETTANT DE DÉTECTER UNE OU PLUSIEURS CONDITIONS À L'INTÉRIEUR D'UN TUYAU

(30) Priority: 10.12.2020 GB 202019519
(43) Date of publication of application: 18.10.2023
(73) Proprietor: HP1 Technologies Limited, Leeds, LS2 3AA (GB)
(72) Inventor: MOOR, Timothy, COWES ISLE OF WIGHT P032 6LG (GB)
(74) Representative: Carpmaels & Ransford LLP
(86) International application number: PCT/EP2021/084811
(87) International publication number: WO 2022/122828

(56) References cited:
- JP-A- 2006 062 414
- US-A1- 2013 036 796
- US-A1- 2015 000 431
- US-A1- 2020 378 859

## Description

### FIELD

The invention relates to a cap for fitting to a pipe end to detect one or more conditions within a pipe, specifically a cap comprising a sensor for detecting a change in pressure, force or temperature within a pipe.

### BACKGROUND

Assemblies exist that can be connected to fluid-transporting pipelines. Such assemblies provide a connection point to pipelines to allow a direction change, diameter change, purging or other use. Such assemblies are known as purge tees, tapping tees, electrofusion purge tees and the like. Purge tees, as one example, are typically formed from the same material as the pipe and have standard cap fittings creating a fluid tight seal. Purge tees and their respective components including standard caps need to comply with the most stringent gas and water industry specifications GIS PL2:4, BS EN 1555-3, BS EN12201-3, additionally requiring WRAS approval for the materials used. In use, a purge tee is a convenient way of connecting pipes and/or purging fluid from the pipe for pressure testing, for example. Typically, a tapping tee is an integral part enabling the tap to cut through the main pipe once the purge tee is connected. The tap then acts as a valve and, in the open position, permits gas from the main pipe to be channelled into the purge tee area. This offers the opportunity to measure the contents/fluid inside the purge tee. In any of the preferred uses of the purge tee it is important that there are no protrusions or components that inhibit performance or function in anyway. Examples of companies that make such assemblies include Radius Systems and Fusion Group.

Standard caps are used with the above-described assemblies as a way of sealing any open sections when not required for use and creating a fluid-tight seal so as to not impede the normal functioning of the pipe.

US 2020/378859 A1 discloses a nozzle cap for a fire hydrant and a method for manufacturing a nozzle cap to detect leaks in a fluid system.

US 2015/000431 A1 discloses an element provided in particular as a closure element or fastening element for inserting into a bore in a component, such as into a bore in an engine, a valve block, a hydraulic unit or a container.

### SUMMARY

The invention is defined by the claims.

Disclosed herein is a cap for fitting to a pipe end to detect one or more conditions within a pipe, the cap comprising: a housing comprising a first opening at a first end thereof, the opening comprising a fitting means arranged to cooperate with a corresponding fitting means of the pipe end to secure the cap to the pipe end; and a sensor, the sensor being configured to detect one or more conditions within a pipe, wherein, when the cap is fitted to a pipe end, the sensor is arranged to detect one or more conditions within a pipe comprising the pipe end.

Optionally, the pipe end is one end of a pipe tee, and optionally wherein the pipe tee is a purge tee.

The fitting means of the first opening is a screw thread located on an internal wall of the housing, and the corresponding fitting means of the pipe end is a corresponding screw thread on an external wall of the pipe end.

Optionally, the cap is arranged to create a fluid-tight seal with the pipe end.

Optionally, the sensor is located within the housing.

Optionally, the cap comprises a second opening at a second end thereof, and a sensor module including the sensor, the second opening being arranged to receive the sensor module.

Optionally, the sensor module is removable.

Optionally, the sensor module comprises a sensor module fitting means arranged to cooperate with a corresponding second opening fitting means of the second opening to secure the sensor module within the second opening.

Optionally, the sensor module fitting means comprises a screw thread located on an external wall of the sensor module, and wherein the corresponding second opening fitting means comprises a corresponding screw thread on an internal wall of the second opening.

Optionally, the sensor module is arranged to create a fluid-tight seal with the second opening.

Optionally, the sensor module comprises a first end and a second end and wherein, when the sensor module is received into the second opening, the first end is in communication with the second opening and the second end is in communication with an exterior of the cap. Optionally, the sensor is located at the first end of the sensor module.

Optionally, the first end comprises a recessed portion, the sensor being located within the recessed portion.

Optionally, the first end protrudes into an interior of the cap but does not extend beyond the cap.

Optionally, the sensor is integral with the sensor module.

The cap comprises an electrical connection point for the sensor on an external wall of the cap.

Optionally, the second end of the sensor module comprises the electrical connection point for the sensor.

Optionally, a diameter of the second opening is less than a diameter of the first opening.

Optionally, the sensor is a piezoresistive sensor.

Optionally, the cap is formed of a polymer such as pipe grade polyethylene, low density polyethylene or high density polyethylene.

Optionally, the one or more conditions comprises at least one of a force, pressure or temperature.

Also disclosed herein is a system for detecting a one or more conditions within a pipe, the system comprising: the cap including any of the above features; and a processing unit electrically connected to the sensor of the cap via the electrical connection point, wherein the processor is arranged to determine one or more conditions within the pipe.

Optionally, the processing unit further comprises a processor.

Optionally, the processing unit further comprises a power source to provide electrical power to the processing unit and the sensor.

Optionally, the processing unit further comprises a wireless communication means for transmitting a signal from the sensor.

Optionally, the cap comprises the processing unit.

Also disclosed herein is a method for detecting a change in one or more conditions within a pipe using the system having any of the above features, the method comprising: detecting, based on a first signal from the sensor, a first reading relating to a condition within the pipe at a first time; detecting, based on a second signal from the sensor, a second reading relating to the condition within the pipe at a second time; and determining, by the processing unit, a change in the condition based on a difference between the first reading and the second reading.

### BRIEF DESCRIPTION OF THE DRAWINGS

Examples of the technology described herein are provided with reference to the below-described figures:
Figure 1 shows various views of a cap 100 according to an embodiment;
Figure 2 shows various views of a sensor module 200 according to an embodiment;
Figure 3 shows a cap 100 having the sensor module 200 inserted therein;
Figure 4 shows a cover 400 that can be optionally fitted to the cap 100;
Figure 5 shows an example pipe and pipe tee having a standard cap installed thereon, and the cap 100 and sensor module 200.
Figure 6 shows a system 600 of the cap 100, the sensor module 200 and a processing unit 606 installed on a pipe tee according to an embodiment.

Like numerals are used to describe like components throughout.

### DETAILED DESCRIPTION

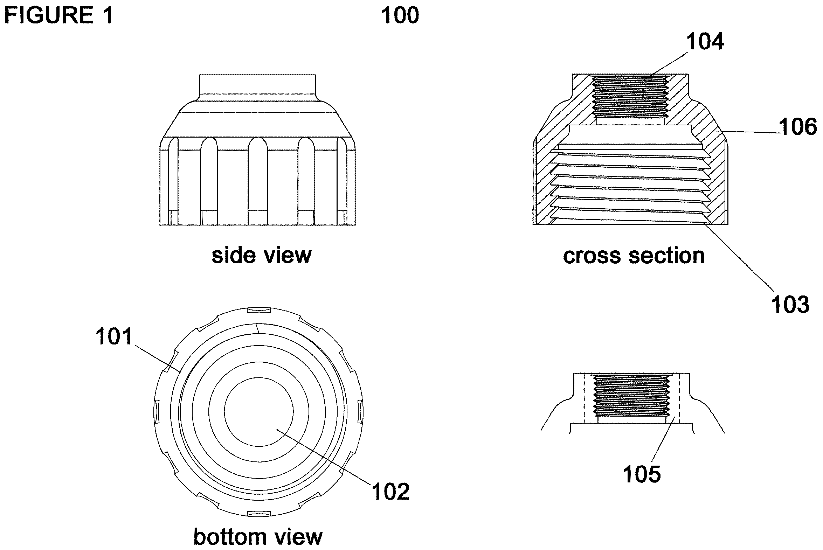

Figure 1 illustrates a cap 100 for fitting to a pipe end. Such a pipe end may be part of a pipe that transports fluid around a pipeline, for example liquid or gas or a mixture thereof. The fluid may be natural gas or hydrogen, for example. Such a pipe includes pipelines, pipe fittings, utility pipelines, energy and power pipelines, water pipes, gas pipes, heating pipes, district heating pipes and oil pipelines, for example.

The cap 100 comprises a housing having a first opening 101 at a first end thereof and, optionally, a second opening 102 at a second end thereof. As shown in figure 1, the second end is opposite the first end. The first opening 101 is also shown having a fitting means 103. In the example of figure 1, the fitting means 103 is a screw thread located on an internal wall of the cap 100. As is shown, the first opening 101 is substantially circular and the screw thread extends along the internal wall forming a substantially cylindrical threaded section. The fitting means 103 is arranged to interact and correspond with a fitting means of the pipe end (not shown) in order to secure the cap 100 to the pipe end and create a fluid-tight seal. In this case, the pipe end has a corresponding threaded section to interact with the fitting means 103, such that the cap 100 may be screwed onto the pipe end. Such a fluid-tight seal may be achieved via interaction with of the two fitting means themselves, however additional components may be provided to ensure a fluid-tight seal. An example additional component is a rubber O-ring, for example, however other components may be used as would be understood.

The fitting means 103 of the cap 100 may be substantially the same as existing caps already in use for sealing pipe ends. Such a fitting means 103 therefore allows retrofit to existing pipe ends, which already have threaded sections, without requiring any alteration to the pipe ends themselves. As such, the cap 100 described herein may be easily retrofitted to existing pipelines.

The cap 100 includes a wall 106. The wall may have a variety of thicknesses and may correspond to the wall thickness of standard caps. As an example, the wall thickness may be at least 3.0mm, and may vary across the profile of the cap.

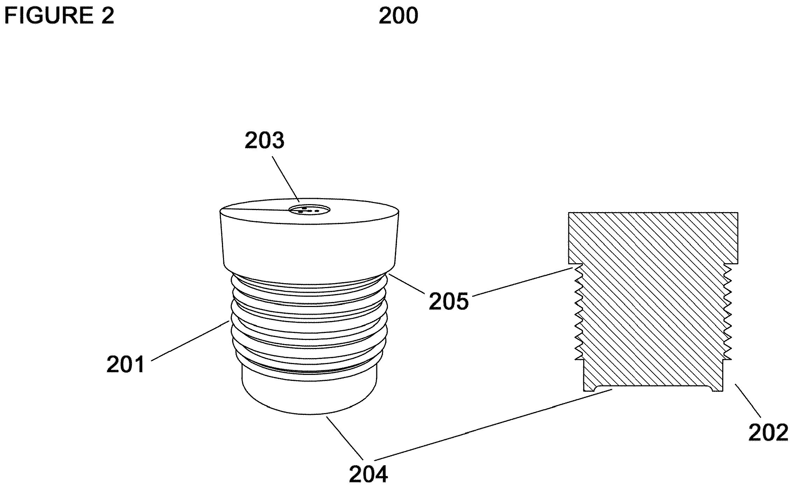

The second opening 102 of the cap 100 may also be substantially circular and, like the first opening 101, may include a fitting means extending along an internal wall of the second opening 102 forming a substantially cylindrical threaded section. This fitting means is arranged to interact and correspond with a fitting means of a sensor module 200 (see figure 2). The diameter of the second opening 102 may be less than the diameter of the first opening 101.

To manufacture the cap 100, any material and any manufacturing technique can be used. For example, the cap 100 may be injection moulded with polyethylene as the polymer. Particularly, pipe grade polyethylene may be used. Alternatively, low density or high density polyethylene may be used. While the cap 100 may be moulded as a single component, the cap 100 may alternatively be produced in two component parts. In the case of two component parts, the fitting means of the second opening 102 may be formed separately as part 105 shown in figure 1. The part 105 may then be fitting to the second opening 102 using an adhesive, for example, or any other method such as a heat or sonic weld, knurl and groove, snap fit, or friction fit, with or without additional sealing. Indeed any fitting method may be used as long as at least a fluid-tight seal, and preferably a hermetic seal, in provided.

The dimensions and size of the cap 100 can vary. In one example, the first opening 102 may be shaped and sized to fit a 32mm purge tee or tapping tee orifice. The same sized cap 100 may also be used for other sized orifices, such as a 63mm tee orifice, by providing a standard reducer component to reduce the size of the tee orifice down to the dimensions of the first opening 102, as would be understood. The reducer component may, for example, be fittable at one end to a 63mm tee orifice and provide, at another end of the reducer component, a 32mm orifice for fitting the cap 100. In other examples, the shape and size of the first opening 102 can be determined based on the shape and size of a target pipe end. While a reduction in tee orifice size has been discussed, the opposite may also be provided, such as an increaser component to increase the size of the tee orifice up to the size of the first opening 102.

Looking now at figure 2, the sensor module 200 comprises a fitting means 201 arranged to interact and correspond with the fitting means of the second opening 102. As shown in figure 2, and particularly in cross section 202, the sensor module 200 may be substantially cylindrical and the fitting means 201 may be thread extending along at least part of an external wall of the sensor module 200. In this embodiment, the fitting means 201 of the sensor module 200 interacts with the threaded section of the second opening 102 allowing the sensor module 200 to be screwed into the second opening. This screw fixing of the sensor module 200 to the second opening 102 allows the sensor module 200 to be removably attached to the cap 100. This is beneficial in that the sensor module 200 may be changed without requiring a new or different cap 100. The fixing of the sensor module 200 to the cap 100 provides a fluid-tight seal and, as would be understood, additional compressible components may be provided to ensure that the seal is fluid-tight. For example, an O-ring, gasket or other components may be provided, as would be understood. An example location for additional sealing components is between the fitting means 201 and an optional module head, integral with the sensor module 200, that provides a sealing shoulder 205 between the fitting means 201 and the module head. An O-ring provided around the sealing shoulder 205 can be formed from rubber such as Nitrile rubber, Viton or silicon.

Although a screw fitting means has been described, any fitting method may be used to secure the sensor module 200 into the second opening 102 in a removable or fixed manner. For example, an adhesive may be used instead of threaded sections.

The sensor module 200 includes a sensor (not shown) at a first end 204 thereof. The sensor may be any type of sensor that is able to detect a condition within the pipe, such as a pressure, force or temperature, and may be a pressure transducer. The sensor may be attached to the first end 204 in any suitable manner. For example, the first end 204 may include a recessed portion (see the cross section in figure 2) within which the sensor can be located. The recessed portion may include a raised perimeter to aid placement and securement of the sensor, as shown in figure 2.

In the case of the sensor being a pressure sensor, the sensor may comprise piezoresistive material such as the pressure-sensitive sensor provided by HP1 Technologies Ltd or Microsensor. For example, the sensor may be formed of a plurality of layers to form a pair of electrodes connected by a piezoresistive ink spot. The ink spot may be laid across the electrodes or sandwiched therebetween. As would be understood, the resistance of the ink spot changes in response to a pressure or force experienced by the ink spot, thereby allowing a resistance change across the ink spot to be measured via connection of the two electrodes to processing circuitry. The change in resistance allows a change in pressure/force to be derived therefrom.

The sensor module 200 also includes a second end opposite the first end 204, the second end includes an electrical connection point 203. Terminals of the sensor run through the interior of the sensor module 200 from the first end 204 to the second end, to provide terminal connections at the electrical connection point 203. The electrical connection point therefore 203 provides an area for connecting the sensor to other circuitry via wires/cables. The electrical connection point 203 may provide one or more physical and electrical connection points for cables, or cables may simply extend out from electrical connection point 203 and be directly connected to the sensor through the interior of the sensor module 200. Optionally, the electrical connection point 203 include one or more additional materials for the purposes of shielding the electrical components/contacts for compliance with the necessary safety regulations for pipelines. Shielding may also be provided over the sensor itself as is necessary.

When the sensor module 200 is fitted to the cap 100, the first end 204 is in communication with and exposed to the interior of the cap 100, and the second end is in communication with and exposed to the environment external to the cap 100. In this manner, when the cap 100 is fitted to a pipe end, the sensor is in communication with and exposed to the interior of the pipe. Preferably, the first end 204 and sensor are sized such that the first end 204 and sensor remain confined within the geometry of the cap. In other words, the first end 204 and sensor protrude into the interior of the cap 100 but do not extend beyond the cap 100 (i.e. past the first opening 101).

Although only one sensor has been described at the first end 204, a plurality of sensors may be provided. Such sensors may be of the same type (e.g. pressure) or could be of different types (e.g. pressure and temperature). The capabilities of the sensor and the condition to be sensed can be determined based on the specifics of the pipe in question, and indeed a plurality of different sensors may be used to detect different conditions in the same pipe.

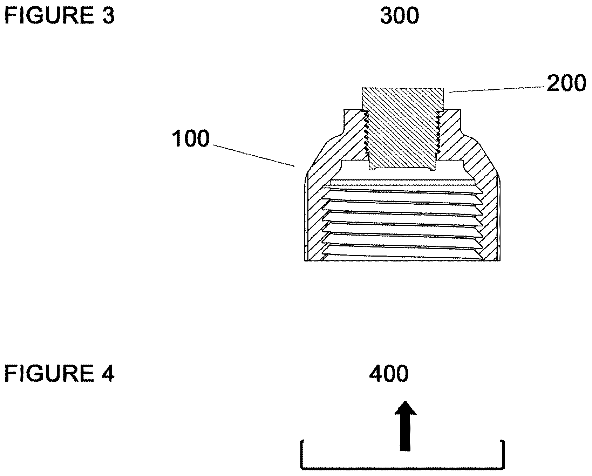

Figure 3 shows a cross section 300 of cap 100 with sensor module 200. Cap 100 and sensor module 200, as mentioned previously, are at least fluid-tight and preferably hermetically sealed to the relevant compliant standards. This can be achieved via the corresponding fitting means themselves, or additional components could be added to work in conjunction with the fitting means, as previously mentioned.

Figure 4 shows a cover 400 that may be placed at the base of the cap 100, where the first opening 101 is located, to protect the exposed sensor at the first end 204 of the sensor module 200 during transit or storage. The cover 400 preferably has a wider diameter than either the reducer component or pipe tee orifice so that it is not possible to fit the cap 100 without removing the cover 400 first. Optionally, a second or even a third cover can be used for protecting the electrical connection point 203 and/or for directly protecting the sensor located at the first end 204. The optional additional covers are not illustrated in figure 4.

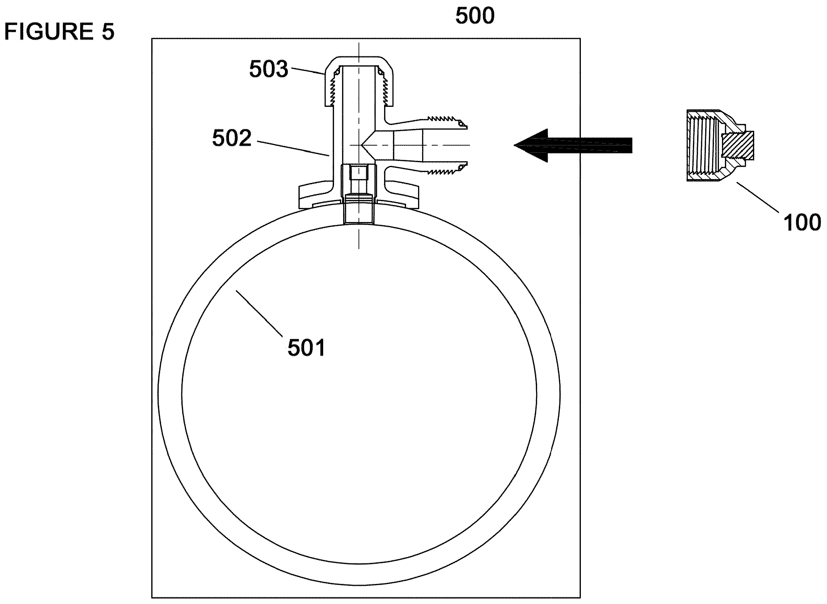

Figure 5 shows an example pipe system 500 having a pipe 501 which transports fluid, an example pipe tee 502 (in this case a purge tee) and an example standard cap 503 as is known in the art. As shown, the cap 100 described herein can be attached to any point of the pipe tee where a standard cap could instead be fitted. Example companies that make purge tees and similar fitments which include standard caps are Radius Systems and Fusion.

The fluid being transported through the section of pipe 501 at the purge tee point fills the cavity of the purge tee 502. The benefit of introducing the cap 100 at the purge tee or tapping tee point is that the condition of the fluid at this point has the same readings, such as pressure values, as the fluid in the pipe 501 in that section at any given time. Therefore, there is no requirement for a sensor to be inserted into the pipe 501 itself.

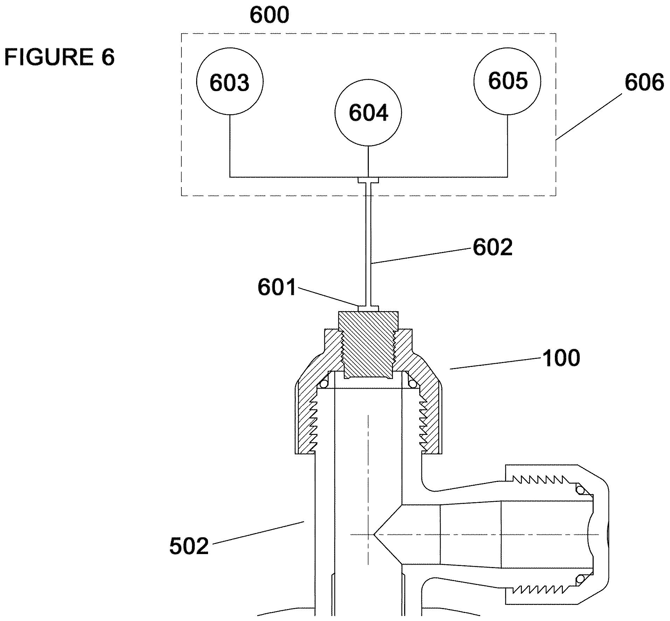

Figure 6 shows a system 600 comprising the cap 100, including the sensor module 200, and a processing unit 606. The cap 100 shown in figure 6 is located in situ and fixed to a pipe end of a pipe tee 502 (in this case, a purge tee). When fixed, the sensor of the sensor module 200 is exposed to the interior of the pipe tee 502 which is connected to a section of the pipe 501. The cap 100 is at least fluid-sealed, and ideally hermetically sealed, to the pipe tee 502 by the fitting means 103 previously described (and optionally compression of an O-ring located at the pipe end opening).

The sensor of the sensor module 200 can be connected, via the electrical connection point 203, to a cable connector 601 that connects one end of an electrical cable 602 between the sensor module 200 of the cap 100 and other elements of a condition detecting system. To complete the electrical circuit, the other end of the electrical cable 602 can be connected to the processing unit 606 which may include a plurality of equipment and devices such as one or more of : a power source 603, a CPU, hub or port 604, and a wireless communication means 605 to interpret signals (A/D converter) received from the sensor and to transmit signals and/or data remotely, or receive signals and/or data. Combinations of all or individually 603, 604 and 605 can be housed in a surface box near the location of the cap 100. This system allows the sensor module 200 of the cap 100 to detect and transmit signal data regarding the condition in the pipe.

While the elements 603, 604 and 605 have been described as separate from the cap 100 and sensor module 200, these elements could instead be part of the cap 100 or sensor module 200 and housed therein or integral therewith. This may be by virtual of a separate compartment within or joined to the cap 300 or sensor module 200 to house these elements.

The content of the pipe can vary (e.g. gas or liquid), as can the sensing capability and type of sensor, which may include multiple sensors or combinations of sensors. Preferably, the sensor includes at least one sensor being a pressure sensor and having piezoresistive material.

Installation of the cap 100 onto a pipe end can be performed in the same way as installation of a standard cap. If covers 401 are used, the cover should be removed prior to installation. Following initial installation, it will then depend upon the installing company's preferred method to connect the sensor module 200 of the cap 100 to power and third-party devices enabling data transfer. It would be recommended to have cleared a path between, for example, the purge tee assembly and the ground surface which would have been required on installation of the purge tee. The cleared pathway allows for the introduction of the cable 602 to be connected to the sensor module 200. Optionally, protective piping, additional seals and/or surface boxes can be introduced in accordance with the company's preferred protocol and compliance criteria. Optionally, the external profile of the cap 100 or sensor module 200 may also provide means for fitment or connection to such protective piping with the introduction of extensions on the outer profile of the cap.

The other end of the cable 602 can then be connected to the third-party equipment enabling data transfer and use. Optionally, data can be received which may include any remedial actions that need to be conducted based on the data/signal output of the sensing elements in the sensor.

The use of the cap 100 and sensor module 200 has various benefits. One benefit is the ability to readily and easily retrofit a device to detect the current, or changes in, conditions within a pipe. Example conditions are force, pressure and temperature, and the correct sensor or sensors for detecting such a condition is chosen. Other condition changes may also be measured. One method would be to detect a first reading relating to a condition (e.g. pressure) at a first time, detect a second reading relating to the condition at a second time, and, using a processor, determine a change based on the different between the first reading and the second reading. In the example of the condition being pressure, this method determines the pressure change within the pipe over time.

Other uses are envisioned, and the cap 100, sensor module 200 and system described herein may be used to monitor the conditions within a pipe in real-time by virtue of sending a constant or periodic transmission of sensor data to a third party, before or after analysis by a processing unit such as the processing unit 606. Such signals may be monitored, recorded or measured to enable a real-time determination of conditions within a pipe. A plurality of such caps 100 and sensor modules 200 or systems may be deployed throughout a pipeline network to provide a "smart" pipeline in which the condition of all or specific pipe sections is known in real-time.

Further, the use of the cap 100 and sensor module 200 enables predictions based on artificial intelligence models, throughout pipelines, and the introduction of remedial action based on current and building trends from sensor data. This includes being able to understand pressure drops or fluid loss through slow leaks and/or severed pipes in a particular location, for example.

## Claims

1. A cap (100) for fitting to a pipe end to detect one or more conditions within a pipe (501) comprising the pipe end,
the cap comprising:
a housing comprising a first opening (101) at a first end thereof, the opening comprising a fitting means (103) arranged to cooperate with a corresponding fitting means of the pipe end to secure the cap to the pipe end; and
a sensor, the sensor being configured to detect one or more conditions within the pipe,
wherein, when the cap is fitted to the pipe end, the sensor is arranged to detect one or more conditions within the pipe,
wherein the fitting means of the first opening is a screw thread located on an internal wall of the housing, and wherein the corresponding fitting means of the pipe end is a corresponding screw thread on an external wall of the pipe end,
**characterised in that**
the cap comprises an electrical connection point for the sensor on an external wall of the cap.

2. The cap (100) of claim 1, wherein the pipe end is one end of a pipe tee, and optionally wherein the pipe tee is a purge tee (502).

3. The cap (100) of any preceding claim, wherein the sensor is located within the housing.

4. The cap (100) of any preceding claim, wherein the cap (100) comprises a second opening (102) at a second end thereof, and a sensor module (200) including the sensor, the second opening being arranged to receive the sensor module, and optionally wherein the sensor module is removable.

5. The cap (100) of claim 4, wherein the sensor module (200) comprises a sensor module fitting means (201) arranged to cooperate with a corresponding second opening fitting means of the second opening (102) to secure the sensor module within the second opening, and optionally wherein the sensor module fitting means comprises a screw thread located on an external wall of the sensor module, and wherein the corresponding second opening fitting means comprises a corresponding screw thread on an internal wall of the second opening.

6. The cap (100) of claims 4 or 5, wherein the sensor module (200) comprises a first end and a second end and wherein, when the sensor module is received into the second opening (102), the first end of the sensor module is in communication with an interior of the cap and the second end of the sensor module is in communication with an exterior of the cap, and optionally wherein the sensor is located at the first end of the sensor module, and further optionally wherein the first end comprises a recessed portion, the sensor being located within the recessed portion.

7. The cap (100) of claim 6, wherein the second end of the sensor module (200) comprises the electrical connection point (203) for the sensor.

8. The cap (100) of any of claims 4 to 7, wherein a diameter of the second opening (102) is less than a diameter of the first opening (101).

9. The cap (100) of any preceding claim, wherein the sensor is a piezoresistive sensor.

10. The cap (100) of any preceding claim, wherein the one or more conditions comprise at least one of a force, pressure or temperature.

11. A system for detecting one or more conditions within a pipe (501), the system comprising:
the cap (100) of any preceding claim; and
a processing unit (606) electrically connected to the sensor of the cap via the electrical connection point,
wherein the processor is arranged to determine one or more conditions within the pipe.

12. The system of claim 11, wherein the processing unit (606) further comprises a power source (603) to provide electrical power to the processing unit and the sensor.

13. The system of claims 11 or 12, wherein the processing unit (606) further comprises a wireless communication means (605) for transmitting a signal from the sensor.

14. The system of any of claims 11 to 13, wherein the cap (100) comprises the processing unit (606).

15. A method for detecting a change in one or more conditions within a pipe (501) using the system of any of claims 11 to 14, comprising:
detecting, based on a first signal from the sensor, a first reading relating to a condition within the pipe at a first time;
detecting, based on a second signal from the sensor, a second reading relating to the condition within the pipe at a second time; and
determining, by the processing unit (606), a change in the condition based on a difference between the first reading and the second reading.

## Patentansprüche

1. Kappe (100) zum Anbringen an einem Rohrende, um einen oder mehrere Zustände in einem Rohr (501) zu erfassen, das das Rohrende umfasst, wobei die Kappe Folgendes umfasst:
ein Gehäuse mit einer ersten Öffnung (101) an einem ersten Ende, wobei die Öffnung ein Anschlussmittel (103) umfasst, das so angeordnet ist, dass es mit einem entsprechenden Anschlussmittel des Rohrendes zusammenwirkt, um die Kappe an dem Rohrende zu befestigen; und
einen Sensor, der so ausgebildet ist, dass er einen oder mehrere Zustände innerhalb des Rohrs erfasst,
wobei, wenn die Kappe auf das Rohrende aufgesetzt ist, der Sensor so angeordnet ist, dass er einen oder mehrere Zustände innerhalb des Rohres erfasst,
wobei das Anschlussmittel der ersten Öffnung ein Schraubgewinde ist, das sich an einer Innenwand des Gehäuses befindet, und
wobei das entsprechende Anschlussmittel des Rohrendes ein entsprechendes Schraubgewinde an einer Außenwand des Rohrendes ist,
**dadurch gekennzeichnet, dass**
die Kappe eine elektrische Anschlussstelle für den Sensor an einer Außenwand der Kappe aufweist.

2. Kappe (100) nach Anspruch 1,
wobei das Rohrende ein Ende eines Rohr-T-Stücks ist, und optional,
wobei das Rohr-T-Stück ein Spül-T-Stück (502) ist.

3. Kappe (100) nach einem der vorhergehenden Ansprüche,
wobei sich der Sensor innerhalb des Gehäuses befindet.

4. Kappe (100) nach einem der vorhergehenden Ansprüche,
wobei die Kappe (100) an ihrem zweiten Ende eine zweite Öffnung (102) und ein den Sensor enthaltendes Sensormodul (200) aufweist, wobei die zweite Öffnung so angeordnet ist, dass sie das Sensormodul aufnimmt, und wahlweise,
wobei das Sensormodul abnehmbar ist.

5. Kappe (100) nach Anspruch 4,
wobei das Sensormodul (200) ein Sensormodulbefestigungsmittel (201) umfasst, das so angeordnet ist, dass es mit einem entsprechenden zweiten Öffnungsbefestigungsmittel der zweiten Öffnung (102) zusammenwirkt, um das Sensormodul innerhalb der zweiten Öffnung zu befestigen, und optional,
wobei das Sensormodulanschlussmittel ein Schraubgewinde umfasst, das sich an einer Außenwand des Sensormoduls befindet, und
wobei das entsprechende Anschlussmittel der zweiten Öffnung ein entsprechendes Schraubgewinde an einer Innenwand der zweiten Öffnung aufweist.

6. Kappe (100) nach Anspruch 4 oder 5,
wobei das Sensormodul (200) ein erstes Ende und ein zweites Ende aufweist und wobei, wenn das Sensormodul in der zweiten Öffnung (102) aufgenommen ist, das erste Ende des Sensormoduls in Verbindung mit einem Inneren der Kappe steht und das zweite Ende des Sensormoduls in Verbindung mit einem Äußeren der Kappe steht, und optional,
wobei sich der Sensor am ersten Ende des Sensormoduls befindet, und ferner optional,
wobei das erste Ende einen ausgesparten Abschnitt aufweist und der Sensor innerhalb des ausgesparten Abschnitts angeordnet ist.

7. Kappe (100) nach Anspruch 6,
wobei das zweite Ende des Sensormoduls (200) den elektrischen Anschlusspunkt (203) für den Sensor umfasst.

8. Kappe (100) nach einem der Ansprüche 4 bis 7,
wobei ein Durchmesser der zweiten Öffnung (102) kleiner als ein Durchmesser der ersten Öffnung (101) ist.

9. Kappe (100) nach einem der vorhergehenden Ansprüche,
wobei der Sensor ein piezoresistiver Sensor ist.

10. Kappe (100) nach einem der vorhergehenden Ansprüche,
wobei der eine oder mehrere Zustände mindestens eines der folgenden sind: Kraft, Druck oder Temperatur.

11. System zum Erfassen eines oder mehrerer Zustände innerhalb eines Rohrs (501), wobei das System Folgendes umfasst:
die Kappe (100) nach einem der vorhergehenden Ansprüche; und
eine Verarbeitungseinheit (606), die über den elektrischen Anschlusspunkt mit dem Sensor der Kappe elektrisch verbunden ist,
wobei der Prozessor so angeordnet ist, dass er einen oder mehrere Zustände innerhalb des Rohres bestimmt.

12. System nach Anspruch 11,
wobei die Verarbeitungseinheit (606) ferner eine Energiequelle (603) umfasst, um die Verarbeitungseinheit und den Sensor mit elektrischer Energie zu versorgen.

13. System nach Anspruch 11 oder 12,
wobei die Verarbeitungseinheit (606) ferner ein drahtloses Kommunikationsmittel (605) zum Übertragen eines Signals von dem Sensor umfasst.

14. System nach einem der Ansprüche 11 bis 13,
wobei die Kappe (100) die Verarbeitungseinheit (606) umfasst.

15. Verfahren zum Erfassen einer Änderung eines oder mehrerer Zustände in einem Rohr (501) unter Verwendung des Systems nach einem der Ansprüche 11 bis 14, Folgendes umfassend:
Erfassen eines ersten Messwerts, der sich auf einen Zustand innerhalb des Rohrs zu einem ersten Zeitpunkt bezieht, auf der Grundlage eines ersten Signals von dem Sensor;
Erfassen eines zweiten Messwerts, der sich auf den Zustand im Rohr zu einem zweiten Zeitpunkt bezieht, auf der Grundlage eines zweiten Signals vom Sensor; und
Bestimmen, durch die Verarbeitungseinheit (606), einer Änderung des Zustands auf der Grundlage einer Differenz zwischen dem ersten Messwert und dem zweiten Messwert.

## Revendications

1. Bouchon (100) destiné à être raccordé à une extrémité de tuyau pour détecter une ou plusieurs conditions à l'intérieur d'un tuyau (501) comprenant l'extrémité de tuyau, le bouchon comprenant :
un boîtier comprenant une première ouverture (101) au niveau d'une première extrémité de celui-ci, l'ouverture comprenant un moyen de raccordement (103) agencé pour coopérer avec un moyen de raccordement correspondant de l'extrémité de tuyau pour fixer le bouchon à l'extrémité de tuyau ; et
un capteur, le capteur étant configuré pour détecter une ou plusieurs conditions à l'intérieur du tuyau,
lorsque le bouchon est raccordé à l'extrémité de tuyau, le capteur étant agencé pour détecter une ou plusieurs conditions à l'intérieur du tuyau,
le moyen de raccordement de la première ouverture étant un filetage situé sur une paroi interne du boîtier, et le moyen de raccordement correspondant de l'extrémité de tuyau étant un filetage correspondant sur une paroi externe de l'extrémité de tuyau,
**caractérisé en ce que** le bouchon comprend un point de connexion électrique pour le capteur sur une paroi externe du bouchon.

2. Bouchon (100) selon la revendication 1, l'extrémité de tuyau étant une extrémité d'un té de tuyau, et, en option, le té de tuyau étant un té de purge (502).

3. Bouchon (100) selon l'une quelconque des revendications précédentes, le capteur étant situé à l'intérieur du boîtier.

4. Bouchon (100) selon l'une quelconque des revendications précédentes, le bouchon (100) comprenant une seconde ouverture (102) au niveau d'une seconde extrémité de celui-ci, et un module de capteur (200) comprenant le capteur, la seconde ouverture étant agencée pour recevoir le module de capteur et, en option, le module de capteur étant amovible.

5. Bouchon (100) selon la revendication 4, le module de capteur (200) comprenant un moyen de raccordement de module de capteur (201) agencé pour coopérer avec un moyen de raccordement de seconde ouverture correspondant de la seconde ouverture (102) afin de fixer le module de capteur à l'intérieur de la seconde ouverture, et, en option, le moyen de raccordement de module de capteur comprenant un filetage situé sur une paroi externe du module de capteur, et le moyen de raccordement de seconde ouverture correspondante comprenant un filetage correspondant sur une paroi interne de la seconde ouverture.

6. Bouchon (100) selon les revendications 4 ou 5, le module de capteur (200) comprenant une première extrémité et une seconde extrémité et, lorsque le module de capteur est reçu dans la seconde ouverture (102), la première extrémité du module de capteur étant en communication avec l'intérieur du bouchon et la seconde extrémité du module de capteur étant en communication avec l'extérieur du bouchon, et en option, le capteur étant situé au niveau de la première extrémité du module de capteur, et en option, la première extrémité comprenant une partie en retrait, le capteur étant situé à l'intérieur de la partie en retrait.

7. Bouchon (100) selon la revendication 6, la seconde extrémité du module de capteur (200) comprenant le point de connexion électrique (203) pour le capteur.

8. Bouchon (100) selon l'une quelconque des revendications 4 à 7, le diamètre de la seconde ouverture (102) étant inférieur au diamètre de la première ouverture (101).

9. Bouchon (100) selon l'une quelconque des revendications précédentes, le capteur étant un capteur piézorésistif.

10. Bouchon (100) selon l'une quelconque des revendications précédentes, la ou les conditions comprenant au moins une condition parmi une force, une pression ou une température.

11. Système pour détecter une ou plusieurs conditions à l'intérieur d'un tuyau (501), le système comprenant :
le bouchon (100) selon l'une quelconque des revendications précédentes ; et
une unité de traitement (606) connectée électriquement au capteur du bouchon via le point de connexion électrique,
le processeur étant agencé pour déterminer une ou plusieurs conditions à l'intérieur du tuyau.

12. Système selon la revendication 11, l'unité de traitement (606) comprenant en outre une source d'alimentation (603) pour fournir de l'énergie électrique à l'unité de traitement et au capteur.

13. Système selon l'une quelconque des revendications 11 ou 12, l'unité de traitement (606) comprenant en outre un moyen de communication sans fil (605) pour transmettre un signal provenant du capteur.

14. Système selon l'une quelconque des revendications 11 à 13, le bouchon (100) comprenant l'unité de traitement (606).

15. Procédé pour détecter un changement dans une ou plusieurs conditions à l'intérieur d'un tuyau (501) à l'aide du système selon l'une quelconque des revendications 11 à 14, comprenant :
la détection, sur la base d'un premier signal provenant du capteur, d'une première lecture relative à une condition à l'intérieur du tuyau à un premier instant ;
la détection, sur la base d'un second signal provenant du capteur, d'une seconde lecture relative à la condition à l'intérieur du tuyau à un second moment ; et
la détermination, par l'unité de traitement (606), d'un changement dans la condition sur la base d'une différence entre la première lecture et la seconde lecture.
